# EUROPEAN PATENT APPLICATION

(11) **EP 3 467 676 A1**
(43) Date of publication of application: **10.04.2019**
(21) Application number: 17306331.4
(22) Date of filing: 05.10.2017
(51) Int. Cl.: G06F 17/30

(54) **METHOD AND COMPUTER PROGRAM FOR DYNAMIC UPDATE OF DESIGN AND LAYOUT OF A WEB PAGE**

(71) Applicant: Planchette, Marc, AD700 Escaldes-Engordany (AD)
(72) Inventor: Planchette, Marc, AD700 Escaldes-Engordany (AD)
(74) Representative: Hnich-Gasri, Naïma

(57) **Abstract**

The invention discloses a method, a computer program and a system configured to fully adapt the design of a website based on preferences of the website's publisher and visitors and the evolution of the content of one or more pages of the website. In particular, the invention discloses a method of dynamically updating a page of a website of a publisher, the page having a set of visual elements organized according to a first template of layout, said method comprising: accessing a set of the publisher's keywords; retrieving one or more second templates automatically configured based on the set of the publisher's keywords; preparing a change of the layout of the web page, said change comprising replacing the first template by one of the one or more second templates; wherein said preparing is triggered by an event. The invention offers significant benefits insofar as it allows website ISPs and publishers to permanently optimize the design of a website as a function of its content and the profile of its visitors.

## Description

### FIELD OF THE INVENTION

The present invention relates to the design of a web site, evolution of the design of a web site over time or result of the evolution of its content and adaptation of the design of a web site to a visitor's profile. More specifically, the present invention relates to an automatic design tool that allows a publisher without programming skills to create and/or maintain a website with its design that evolves dynamically without any action from the publisher according to the number of publications to be displayed. The dynamic update of the design of a website according to the present invention may include a change of the number and positions of the layout elements of its pages.

### BACKGROUND PRIOR ART

Within the evolution of information and communications technologies and their expanding impact on social, industrial, educational and all aspects of life, coupled with the limitless growth of the information mass, persons, companies and organizations are more and more aware of the importance of their internet presence.

With growing competition in every sector, website visitors have more and more options and are becoming much more demanding on the quality of experience when visiting a website. The quality of experience can be defined in terms of the ease of navigation, i.e. quick and easy travel throughout an entire website, clarity and readability of information presented on each page of the website, smooth retrieval of specific information thanks to Search Engine Optimization (SEO), accuracy of content, strength of dialogues between the website visitors and the owner or tenant of the website who is acting as a publisher. This list is non-limiting. New features that may be important to the user experience are regularly detected and dealt with by publishers.

In effect, in addition to the content of a website, its design is playing an increasingly important role on the internet presence of the website publisher. It has been demonstrated by several studies that the design of a website can be more important than its content to determine its attraction on visitors and therefore on advertisers.

Therefore, websites publishers turned to adapt the design of their websites not only to their requirements but also to the profiles, interests such as buy, sell, rent, share, exchange, etc, and preferences of the visitors.

Moreover, the update of the design of a website is further required to be as fast as any update of its content; preferably the design of a website is needed to be immediately and dynamically updated when its content is modified so that the quality of experience of the visitors remains at a high level. It is also required that such update be achieved dynamically without any action from the publisher and / or demanding talented programming skills from the website publisher organization.

A website comprises a homepage and possibly, but not necessarily, structured pages. The presentation of each page is defined according to a template of layout which consists of different elements and defines their number, their respective sizes and respective positions.

Said elements of a layout template of a web page present the publications of the publisher, as well as the empty spaces and margins of the web page.

Several platforms, such as Shopify, Wix, WordPress, Magento and others, offer the possibility to create a website by selecting manually a template among predefined static templates, or to build it manually from scratch.

Within such platforms, a modification of the content of a page of a website leading to a modification of the number of its layout elements requires a manual update of the design, either by selecting a new static template, or by manually creating a new template of layout which may involve re-uploading photos and also rewriting the texts from scratch, or by manually adding or removing or moving one or more elements to or from a predefined template of layout.

Manual update of the design of one or more pages of a website no longer seems acceptable and adequate for websites of today and the future that are supposed to be interactive and dynamic.

Patent application published under n° US 2014/0337694 proposes a method for dynamic update of the design of a page of a website in terms of changing colors, text font or other design specifications of static layouts according to statistical analysis of the visits of the website. However, this method has numerous limitations including the fact that an update of the design of a website cannot be triggered automatically as a result of a modification of the website content. Besides, such solution is limited to modifications inside static layouts. Changes of the number and/or the positions of the elements of a layout are not addressed.

In a context when the content of a website can rapidly evolve and possibly imply the change of the number of the layout elements, it is no more practical for a publisher to manually update the design of its website, which is all the more undesirable as the publisher's organization has no programming skills of a professional level.

Moreover, regarding the huge number of persons connected to Internet who can visit a website simultaneously, it is not possible that the publisher of the website in question adapts manually the design of its website according to the profile and the preferences of each visitor.

Therefore, there is a need for a method and a computer program enabling a dynamic update of the design of a website taking into consideration the requirements of the visitors, in particular when the update requires a change of the number and positions of the layout elements of one or more pages of a website.

### SUMMARY OF THE INVENTION

According to the present invention, there is provided a method of dynamic update of the design of one or more pages of a website through the entire change of a template or a part of it.

To this effect, the invention discloses a method of dynamically updating a page of a website designed by a publisher, the page having a set of visual elements organized according to a first template of layout, said method comprising accessing a set of the publisher's keywords, retrieving one or more second templates automatically configured based on the set of the publisher's keywords and preparing a change of the layout of the web page, said change comprising replacing the first template by one of the one or more second templates, wherein said preparing is triggered by an event.

Advantageously, the event is an addition or a removal of one or more of the visual elements to or from the page of the website or another page linked thereto, or an occurrence of a predefined time.

Advantageously, the one or more second templates are selected among previous first templates.

Advantageously, the first template and the one or more of the second templates are defined based on the keywords of a logged-in registered visitor.

Advantageously, the one or more second templates are formed by combination of header, body and footer sub-templates, each one of the header, body and footer and their combination based on the set of the publisher's keywords and the visual elements of the page of the website.

Advantageously, the one or more second templates are formed by combination of header, body and footer sub-templates wherein the sub-templates are generated automatically.

Advantageously, the body of a page of a website is generated by a concatenation of a predefined number of visual elements having predefined statistical dimensions.

Advantageously, a specific format is adapted for one or more visual elements permitting interoperability between said first template and said one or more second templates, such as the 16/9 format.

Advantageously, a combination of a plurality of specific formats is adapted for a plurality of visual elements according to one or more rules of interoperability between said first template and said one or more second templates.

Advantageously, the combination of format 16/9 and format 4/3 is adapted according to one or more rules of interoperability which define the number and orientation of visual elements according to each specific format.

Advantageously, the set of the publisher's keywords may be updated dynamically.

Advantageously, the set of the publisher's keywords comprises a plurality of keywords that may be combined based on a heuristic defined by an internet access provider of the website.

Advantageously, the set of the publisher's keywords comprises a plurality of keywords that may be combined based on a heuristic defined by the publisher.

Advantageously, the heuristic is defined as a function of characteristics of visitors to the website.

The invention discloses also a computer program stored on a physical memory comprising code instructions that, when run on a processor, are configured to cause an update of a page of a website designed by an publisher, the page having a set of visual elements organized according to a first template of layout, said update comprising an access to a first database comprising sets of the publisher's keywords, a retrieval from a second database of one or more second templates, an automatic configuration of the one or more second templates based on the set of the publisher's keywords, a selection of one of the one or more second templates, a preparation triggered by an event of a change of the visual elements of the web page, said change comprising replacing the first template by one of the one or more second templates.

Among other advantages, the invention allows a publisher without programming skills to create a website and update dynamically the design of a created website or a part of it.

Based on preferences that may be expressed very quickly as keywords, the publisher may be proposed a personalized set of templates selected among billions of possible templates.

The level of personalization that can be achieved thanks to the invention is unmatched thanks to the dynamic creation of a template of each page of the website by a combination between different sub-templates, each sub-template presenting a logical part of the page such as header, body or footer.

### BRIEF DESCRIPTION OF THE DRAWINGS

The invention will be better understood and its various features and advantages will emerge from the following description of a number of exemplary embodiments and its appended figures in which:
- Figure 1 displays an architecture in a number of embodiments of the invention comprising a database of registered users' keywords, a database of website sub-templates representing headers, bodies and footers of a page of website and a computer program.
- Figure 2a, 2b, 2c, 2d, 2e and 2f display examples of header sub-templates stored in the database of website sub-templates.
- Figure 3 displays examples of body sub-templates stored in the database of website sub-templates.
- Figure 4 specific formats of body sub-templates that can be employed such as single visual, Z-layout, rule of thirds and golden ratio formats.
- Figure 5a, 5b, 5c and 5d display examples of footer sub-templates stored in the database of website sub-templates.
- Figure 6 displays an operating procedure in a number of embodiments of the invention presenting a case of a registration to the invention platform.
- Figure 7 displays an operating procedure in a number of embodiments of the invention presenting a case of a web site creation.
- Figure 8 displays an example of body generation based on statically dimensioned visual elements.
- Figure 9 displays an operating procedure in a number of embodiments of the invention presenting a case of dynamic update of the design of a web site.
- Figure 10 displays an operating procedure in a number of embodiments of the invention presenting a case of adaptation of the design of a web site to a registered visitor.
- Figure 11 displays a flow chart of the steps of dynamic design update method in a number of embodiments of the invention.

### DETAILED DESCRIPTION OF THE INVENTION

In this specification, the invention is described by way of examples relative to dynamic update of the design of one or more pages of a website through the entire change of a template or a part of it.

The design of a website can make the difference in terms of the quality of experience, the number of its visitors, the profiles of its visitors and thus the development of involved desirable procedures such as improved commercial visibility, business transactions, dialogues, building trust among visitors, etc. The design of a website should be adapted to its visitors. The content of a website may be updated at a rapid pace; its design should therefore be dynamically and preferably immediately updated. The design could also be updated on specific times predefined by the website publisher.

The dynamic update of the content of a website according to the interests and preferences of each visitor should produce more business between sellers, buyers, leasers, etc., by matching what they need. As the content dynamically changes, the design must adapt to its changes.

A website comprises a homepage and possibly, but not necessarily, structured pages. The presentation of each page is defined according to a template of layout.

Said layout is the process of placing and arranging visual elements of a page of a website. A layout defines the number, positions and dimensions of the visual elements. The goal of using a layout is to produce eye-catching pages that grap the attention of the visitors. A set of design rules can be used for this purpose.

Said visual elements can present the publications of the website publisher such as but not limited to written material, photographs, videos, calendars, toolbars, menus, data tables, dialogs, lists or any other artwork. The page margins and the empty spaces between the publications make also part of the visual elements of a layout.

Depending on structural grids, spacing across platforms and screen sizes, said template of a layout defines the number, positions and dimensions of its layout elements. The elements can scale to fit any screen size, which simplifies the process of creating scalable pages of a website.

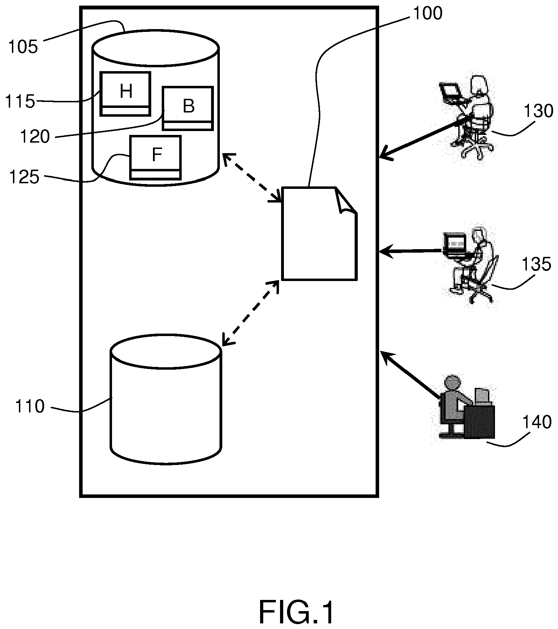

Figure 1 displays an architecture, in a number of embodiments of the invention, comprising a database 110 of registered users' keywords, a database 105 of website sub-templates representing headers, bodies and footers of a page of website and a computer program 100.

Said registered users can specify their personal data such as name, age, sex, address, job, company, etc, their interests such as purchases, sales, offers, requests for leasing, sharing, exchanging, hobbies, updates of their interests, etc, their preferences such as level of confidentiality, non-presentation of specific data, color, font and background preferences, language preferences, etc, or any other specific data that may affect the design of a page of a website. All said personal data, interests, preferences and other specific data are considered as keywords for the database 110 of said registered users' keywords.

Said registered users' keywords may be classified for example as business or personal keywords.

A user of this present invention can be a registered user, having specified his/her keywords, or an unregistered user.

Said registered user can be a publisher of a website 130, i.e. its owner or his tenant.

At a given time, said registered user can be a logged-in registered user, having inserted his login credentials such as login and password, or an unlogged-in registered user 140. The latter is considered in this description at that given time as an unregistered user 140.

A visitor of a website can be a registered user, including a registered logged-in visitor 135 or unlogged-in registered user 140, or an unregistered user 140. The displayed content and the design of the visited website depend on the nature of the visitor.

A page is made of several elements forming its content such as products, services, ideas, etc. To each element of the page are linked users' keywords. This enables the dynamic change of the content and design of each page according to the interests of each visitor.

The database 105 comprises sub-templates for web pages' headers 115, sub-templates for web pages' bodies 120 and sub-templates for web pages' footers 125.

A template of a page of a website is dynamically created by a combination of header, body and footer, one among each sub-template 115, 120 and 125.

Each sub-template 115), 120 and 125) comprises a set of layout elements and defines their number, positions and dimensions.

In an embodiment of the invention, one or more administrators may be allowed to control the computer program 100 and update its version in order to improve the performance of the invention, such as its rapidity, security, energy consumption, quality of experience, quality of service, etc.

In an embodiment of the invention, one or more administrators can control the database 105 of website sub-templates to remove or update or add new sub-templates.

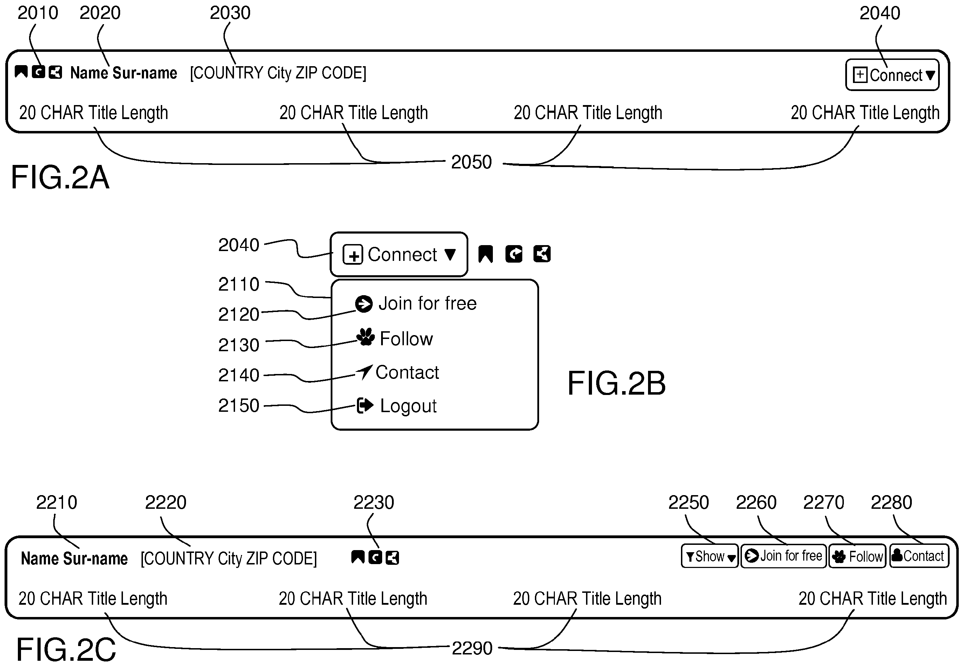

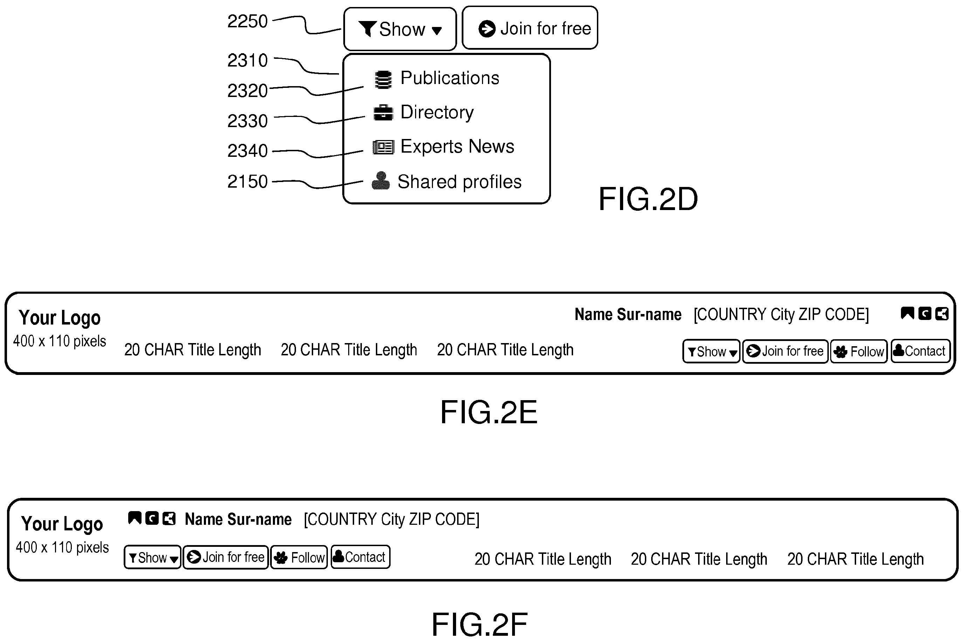

Figure 2 displays examples of header sub-templates 115 stored in the database 105 of website sub-templates. A header comprises one or more visual elements.

Each header sub-template is characterized essentially by the number, the positions and the dimensions of its visual elements.

The header sub-template displayed in figure 2A for example comprises links to professional and social media accounts of said publisher 2010, the name of said publisher 2020, the country, the city and the zip code of said publisher 2030, a drop-down list of connection 2040 and four strings of maximum twenty characters presenting titles of main data 2050, which can represent for example titles of structured pages, each title links to the respective structured page, or titles of different sections in the present page of said website.

When a visitor clicks on drop-down list of connection 2040 displayed in figure 2B of the header sub-template, a list 2110 appears, comprising a visual element for registration for visitors who are still unregistered 2120, a visual element for following the updates of the visited website 2130, a visual element to contact said publisher of the visited website 2140 such as a screen presenting his/her postal address, e-mail, professional card, or any other information allowed by said publisher to be published on his or her website, and a visual element to logout for registered logged-in visitors 2150.

The header sub-template displayed in figure 2C comprises the same elements 2010, 2020, 2030 and 2050 as the header sub-template displayed in figure 2A where the visual elements are organized differently. Besides, the header sub-template of figure 2C comprises a visual element such as a link to access a screen of registration 2260, a visual element to follow the updates of the visited website 2270, a visual element such as a link to a screen presenting the contact information of the publisher of the visited website 2280, and a drop-down list 2250 to access rapidly publications 2310, directory 2320, experts news 2330 and shared profiles 2340 of said publisher.

In addition to the visual elements as the header sub-template displayed in figure 2C, header sub-templates displayed in figures 2E and 2F comprise also a logo of said publisher. In these header sub-templates displayed in figures 2E and 2F, said logo is sized 400 × 110 pixels. Although header sub-templates displayed in figures 2E and 2F have the same visual elements, the organization of their elements defined by their respective layouts are different.

Depending on the content of the website and on said publisher's keywords stored in database 110, the visual elements presented in the header sub-template as well as their arrangement can facilitate the navigation through the website and improve the quality of experience of said website's visitors.

Other elements can be included in header sub-templates or other parts of a page, such as but not limited to company profiles, links to articles, express posts, career management, real estate, business to business marketplace, business to client marketplace, projects, events, etc.

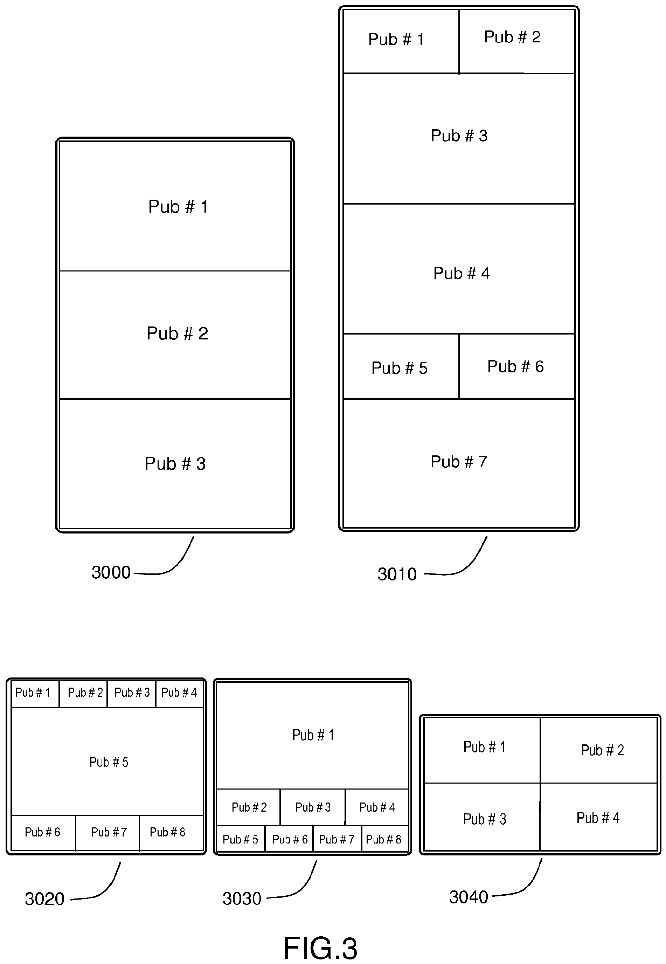

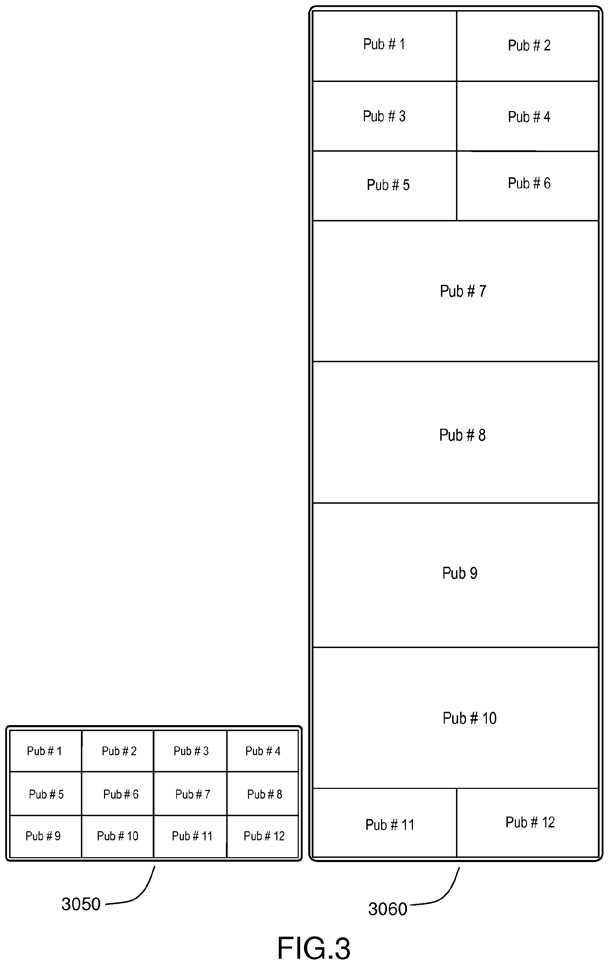

Figure 3 displays examples of body sub-templates 120 stored in the data base 105 of website sub-templates. A body comprises one or more visual elements presenting the publications of said publisher allowed to be published on the respective page of said website such as images, videos, articles, links to other pages of the website, links to external websites, calendar, publicity screens, secured business transactions screen, etc.

Each body sub-template is characterized essentially by the number, the positions and the dimensions of the visual elements of its layout. For example, the body sub-template 3000 comprises three visual elements having all the same dimension, while the body sub-template 3010 comprises seven visual elements, each one having one among two predefined dimensions.

Generally, users are comfortable reading a web page the same way they read a book, from top to bottom, left to right (or otherwise, depending on their language). Users are also more attracted by larger visual elements. Besides, multimedia visual elements are generally more attractive than readable visual elements. Thus, depending on said keywords of said publisher, and depending on the content of said body of a page of a website, it is necessary to make sure to place the most important information at the most relevant positions such as upper left hand column. This will help get the message across more effectively for website visitors.

For instance, body sub-template 3020 presents a main publication in a larger and central visual element. Body sub-template 3030 presents said main publication in a larger visual element on the top. Rather, body sub-template 3040 comprising identically sized visual elements, presents all publications with similar visibilities.

Besides the desired visibility of each publication, said visual elements of a page are constrained by the screen size. For example, both body sub-templates 3050 and 3060 comprise twelve visual elements but the elements of 3050 are compacted to fill into a short page while the elements of 3060 have larger dimensions according to the longer length of the respective page.

The length of said body sub-template is another characteristic in addition to the number, positions and dimensions of its layout's elements. Said length of said body sub-template impacts directly the length of the respective page.

Bottom elements can comprise buttons or links to the top of said body of a page of a website.

According to said publisher keywords, the title of a publication of said publisher may be published in addition to said publication in said body of a page of a website. Likewise, sub-titles can be published.

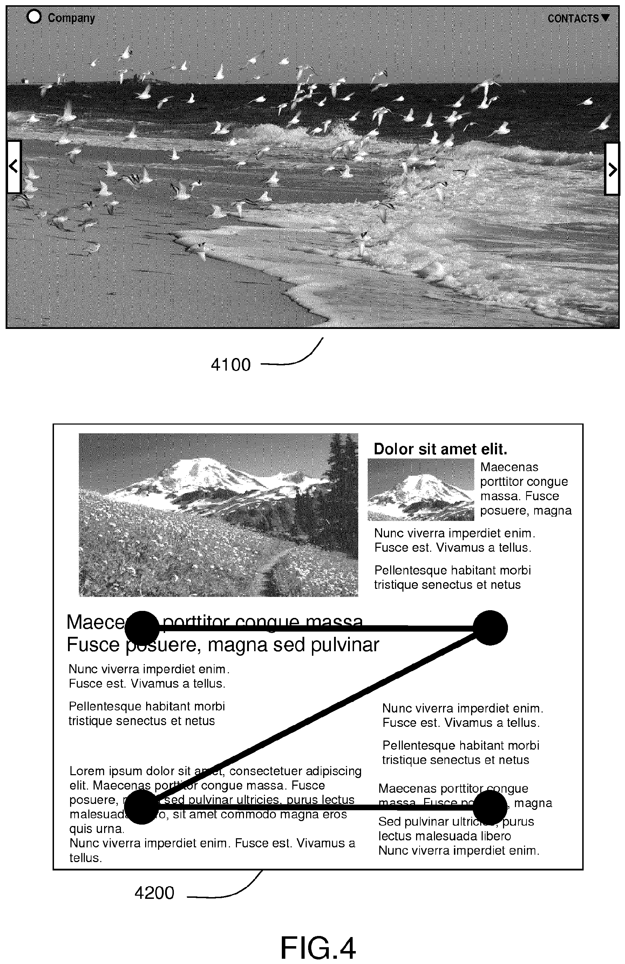

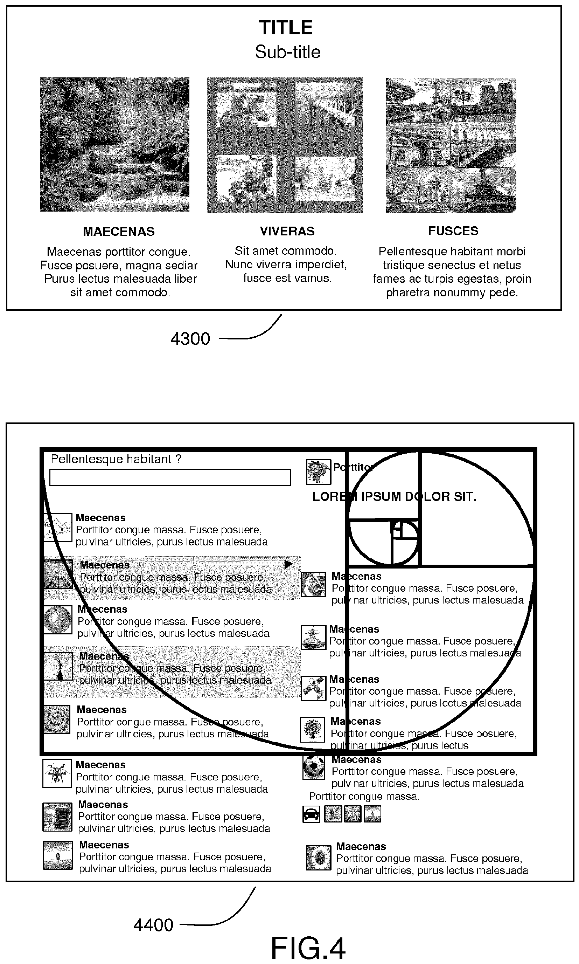

Figure 4 displays specific formats of body sub-templates of the prior art that can be employed in combination with the embodiments of the invention. These examples are similar to what is displayed at https://webdesign.tutsplus.com/articles/an-introduction-to-composition--webdesign-14508. As example, in single visual format 4100, said body is a slideshow of different visual elements and comprises a single visual element at one time and transition elements to display other visual elements. Z-layout format 4200 consists of placing visual elements in the order when writing the letter Z, from left to right and from top to bottom, in the same way of reading a book in a European language. Other layout formats are adapted to other languages having different writing directions such as Semitic and Asiatic languages. Rule of thirds format 4300 consists of organizing visual elements on three columns and preferably three lines also. Golden Ratio format 4400 creates harmonious balance between each two visual elements of said page of a website according a mathematical process based on said golden ratio.

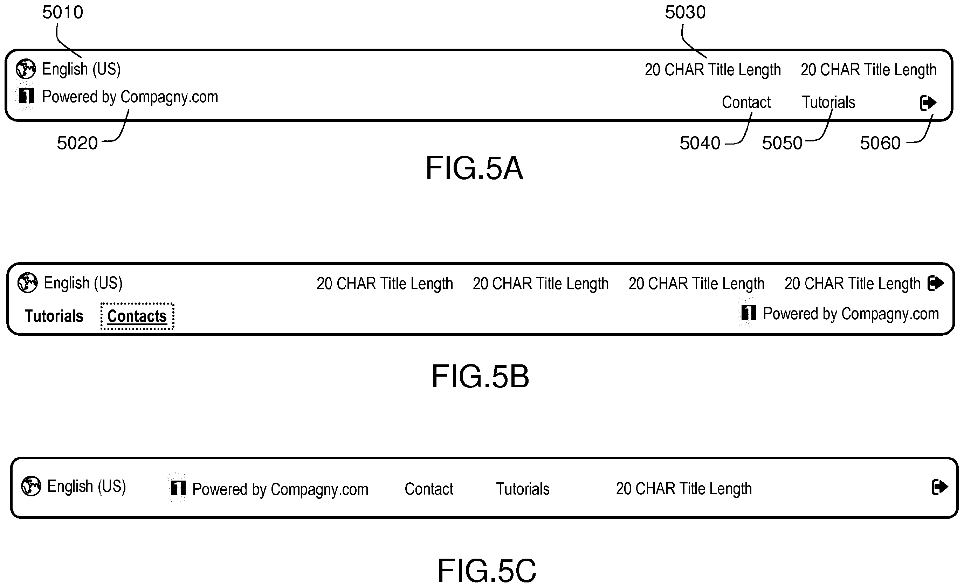

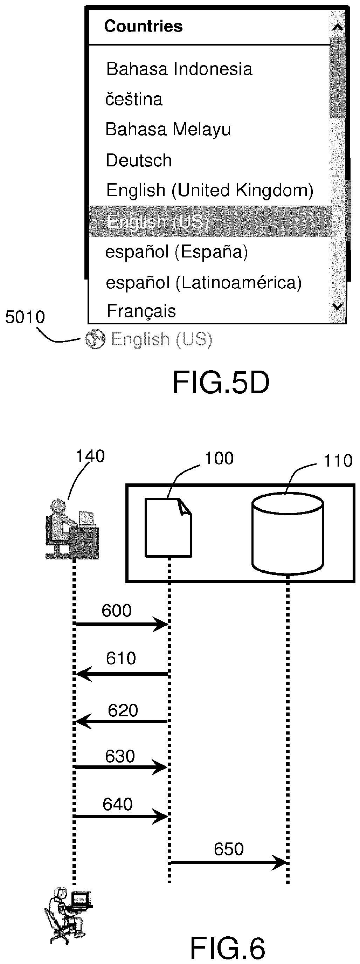

Figure 5 displays examples of footer sub-templates 125) stored in the database 105 of website sub-templates. A footer sub-template is characterized essentially by the number, the positions and the dimensions of its visual elements.

As an example, footer sub-template displayed in figure 5A comprises a drop-down list to choose a language 5010, a notice of the industrial property of the invention 5020, three strings of 20 characters maximum that can display links to other pages of said website 5030, a visual element of contacting 5040 the publisher of the web site or of the administrator of the Internet Access Provider (IAP) that manages a system according to the invention, a link for tutorials 5050 and a button of logging-out for logged-in registered visitors 5060.

Footer sub-template displayed in figure 5B comprises the same visual elements as footer sub-template displayed in figure 5A with an extra string of characters and a different organization of the visual elements. Footer sub-template displayed in figure 5C comprises less visual elements.

When a visitor clicks on the drop-down list 5010, a list of languages appears as displayed in figure 5D. The visitor selects one language and the content of the page will be translated to the selected language or kept on a default language depending on the keywords of the publisher.

Among visual elements that can be included in a footer sub-template, one may find, by way of example, notice of copyright of the invention, notice of copyright of the publisher, terms of service, a visual element to contact the publisher, a visual element to contact the administrator of the system of the invention, links for eventual structured pages, a visual element to select the language, a visual element to select the time zone, information about used cookies, accessibility help, parental or superior guidance, link to frequently asked questions blog, link to careers platform, etc.

It is possible to have pages of a website without header or without footer. The database 105 may not comprise header or footer sub-templates, as it can comprise other sub-templates referring to other parts of a page of a website in addition to said header, body and footer, such as second body sub-templates, sub-header sub-templates, etc.

Visitors may contribute with additional sub-templates to be added to database 105 by the administrator of the IAP that manages a system according to the invention after his/her approbation.

In some embodiments, a sub-template, such as a header or a footer sub-template may be generated automatically by program 100 depending on a publisher keywords and/or answers to specific questions that may be, for example, proposed at the creation of a new template of his/her website.

Figure 6 displays the steps of registration of a user of the system of the invention in a number of its embodiments. An unregistered user 140 establishes a connection 600 with the platform of the system of the invention. An input interface of the computer program 100 proposes a set of questions related to the specific keywords of the user, comprising questions with required answers 610 and questions with optional answers 620. The unregistered user 140 has to provide said required answers 630, such as his or her email and password, and can provide said optional answers 640. Computer program 100 intercepts said required and optional answers that serve as specific keywords 650 of the new registered user. The computer program stores these specific keywords in the database 110.

In another embodiment of the invention, said specific keywords of said registered user can be imported from a website of the respective user or another account of the respective user in an external platform.

A publisher of a website according to the present invention is a registered user.

Based on the publisher's keywords, his or her website may comprise a homepage and possibly, but not necessarily, structured pages.

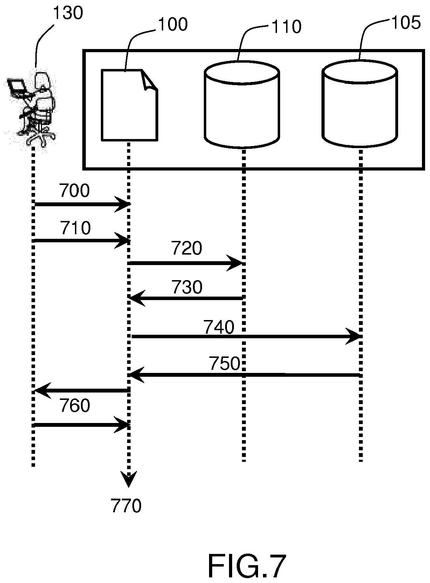

Figure 7 displays the steps of a method of creation of a page of a website in a number of embodiments of the invention. When said publisher 130 asks for the creation 700 of a page of a website and provides its content 710, the program 100 accesses the publisher's keywords 720 among the registered users' keywords stored in database 110. The page in question can be the homepage or a possible structured page of the website. Based on said publisher's keywords 730 and the content 710 of the page of the website to be created, the program 100 accesses database 105 of sub-templates 740, retrieves one or more first templates 750, and proposes retrieved first templates to said publisher 130. Publisher 130 selects one of the retrieved first templates 760; program 100 places therefore said content of the page 710 on the elements of the selected first template 760 and creates the page of the website.

The selection of said first template can be done randomly or based on a preference order defined by the program 100 if said publisher didn't select one among proposed first templates after a predefined timer.

The selection of said first template can also be done systematically by the program 100 instead of a selection based on the choice of the publisher. The systematic selection could be based on a preference order or randomly.

Based on the interests and preferences that may be expressed very quickly as keywords, the publisher may be proposed a personalized set of templates selected among thousands or millions and even billions of possible templates obtained by combinations of header, body and footer sub-templates. In fact, according to some embodiments of the invention, there may be thousands of headers multiplied by hundreds of footers by tens of thousands bodies, that may each contains up to one hundred publications on the homepage. Such embodiment of the invention enables the production of billions of possible combinations and thus billions of possible page templates. Noting that a publisher may display subtitles on his/her homepage, and that a button "view all" is provided for a visitor of a website to see all the publications of the visited website in addition to the publications authorized by the publisher to be displayed on his/her homepage, the number of possible templates may be still increased.

The publisher can be proposed to respond to questions that facilitate and accelerate the process of proposing personalized templates, such as but not limited to, questions on the desire to display a picture of a Logo on the header or the footer for example, the desired number of lines in each part of the page, such as the header lines, the footer lines and the body lines, the desired text lines in each part, the desired alignment of the visual elements of each part such as on the right, on the left, centered or justified, the preferences on which elements to show or hide, etc.

In another embodiment of the invention, instead of being selected among body sub-templates stored in database 105, said body of said page of a website to be created is generated by a concatenation of visual elements having predefined static dimensions specified by the publisher. Said publisher responds to questions asked by program 100 on the required static dimensions of each visual element among said content of the page to be created, where across the width of the page to be created, a respective number of visual elements of each dimension can be concatenated. This method requires lower processing cost and time than retrieving suitable body sub-templates from database 105 and enables to offer more specific templates that cannot be obtained only with a combination of visual elements of different dimensions on the same line.

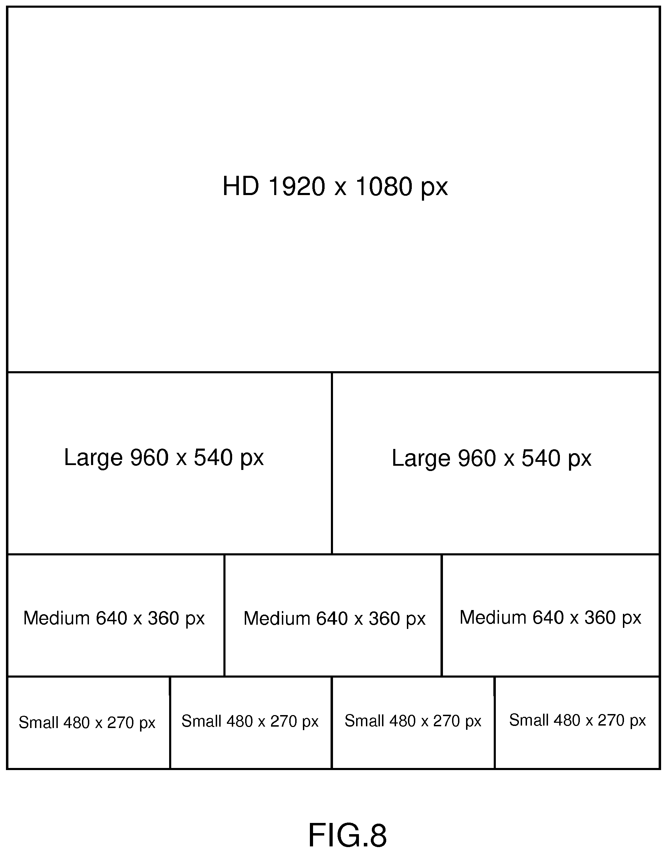

Figure 8 displays an example of body generation based on statically dimensioned visual elements. In this example, there are 4 predefined dimensions that are high-definition dimension of 1920*1080 pixels, large dimension of 960*540 pixels, medium dimension of 640*360 pixels and small dimension of 480*270 pixels. Respectively up to 1 high-definition, 2 large, 3 medium or 4 small dimensioned visual elements can be placed across said width of the page to be created.

In an embodiment of the invention, if a publisher didn't specify yet the content of his or her homepage, a default homepage can be used, comprising for example an advertising visual element of the invention.

Therefore, the invention allows a publisher without programming skills to create easily a website with one or more pages and personalized design.

The present invention permits to update dynamically the design of one or pages of a created website triggered by an event.

In some embodiments of the invention, the triggering event may be an update of the design of a page of a website such as an addition or a removal of a visual element to or from said content of the respective page or another page linked thereto. For instance, an addition or a removal of a structured page or a section in a structured page leads to a modification of the content and therefore the design of the homepage or another structured page linked thereto, such as but not limited to a modification of a table of contents displayed on the homepage, or a modification of a link to the modified structured page displayed on the homepage or on another structured page, or a modification of a sitemap displayed in all footers of the pages of the website.

In some other embodiments of the invention, the triggering event may be an update of the design of a page of a website such as a modification of the properties of one or more of the layout elements of the respective page or another page linked thereto, such as a modification of said level of confidentiality, or a modification of the dimensions, or a modification of the level of priority of display of a one or more visual elements.

In yet some other embodiments of the invention, the triggering event may also be an occurrence of a predefined time. The predefined time may be specified by the publisher 130 in a static list of dates. It may also be randomly defined by the program 100, or defined by a periodicity, fixed or variable. This option of update of the design of a page of a website as a result of an occurrence of a predefined time is particularly interesting, for instance, for seasonal businesses like websites of tourist agencies, scholar activities or universities.

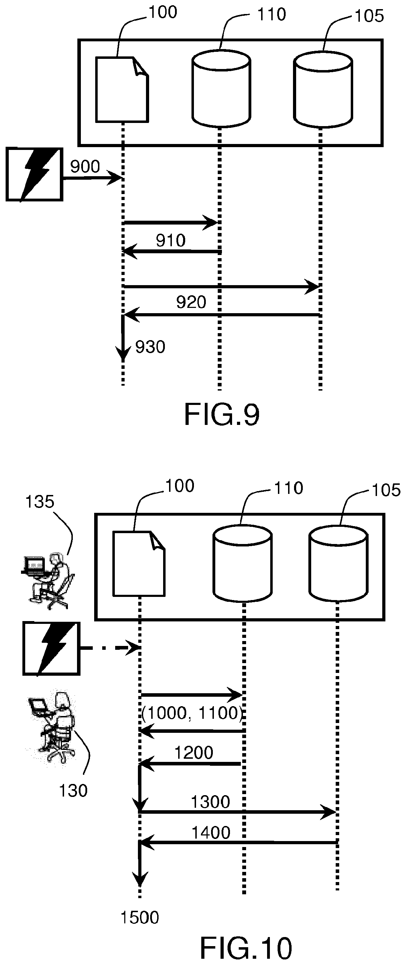

Figure 9 displays the steps of dynamic update of the design of a page of a website in a number of embodiments of the invention. Triggered by an event 900, the program 100 accesses the publisher's keywords stored in database 110. Based on said publisher's keywords 910, the content of the respective page and said event 900, the program 100 accesses database 105, retrieves one or more second templates 920, selects one of them 930, prepares a change of the layout of the respective page and replaces said first template by the selected second template.

The selection of a second template 930 among the retrieved second templates 920 can be done by the publisher 130, or by the program 100 if said publisher didn't select one among proposed second templates after a predefined timer, or systematically by the program 100. The selection of a second template by the program can be based on a preference order or randomly.

As a result of the dynamic update of the design of a page, the dimensions and the positions of one or more of its visual elements may be modified to be adjusted to the width of the page.

All selected first and selected second templates are stored in database 110 in the history of the publisher and can be used for further possible restoration.

Different formats of publications display can be used. However, in a number of embodiments of the invention, a specific format such as but not limited to the format 16/9, can be used for all publications to enable interoperability of designs of a website page whose design having been updated, without re-uploading publications such as photos, videos or texts. Choosing a specific format saves thus time, processing instructions and cost.

The 16/9 format can be appropriate since it is the most common aspect ratio for televisions and computer monitors, the better adapted format to the panoramic human eye perception and is also the international standard format of HDTV, Full HD, non-HD digital television and analog widescreen television.

In a number of embodiments of the invention, a template can be based on a combination of a plurality of specific formats. One or more rules of interoperability can be applied to ensure the interoperability between the plurality of specific formats when creating a website or updating the design of a website.

The one or more rules of interoperability define the possible number of publications according to each specific format and their respective orientation, horizontal or vertical.

In a particular embodiment of the invention, a template can involve combinations of a number of publications presented horizontally or respectively vertically according to the format 16/9 and a number of publications presented vertically or respectively horizontally according to the 4/3 vertical format. Such combination offers interoperability of designs.

The computer program 100 is stored on a physical memory comprising code instructions that, when run on a processor, are configured to cause an update of the design of one or more pages of a website of said publisher using the methods described above.

The default display of a website for said unregistered visitors or said unlogged-in registered users is based on the publisher's keywords regarding their preferred level of confidentiality or, failing that, based on a default level of confidentiality. For instance, the default level of confidentiality can be defined as displaying only the name of the publisher and an advertising visual element of the invention. Said publisher has the possibility to change the level of confidentiality of his/her website by choosing which visual elements to hide or to display for said unregistered visitors or said unlogged-in registered users.

The design of the homepage of a website is updated dynamically according to the number of structured pages allowed by the publisher to be linked thereto. For example, when a website comprising a homepage and three structured pages is visited by an unregistered visitor and the confidentiality level of the publisher allows displaying only the homepage and the first structured page to unregistered visitors, the design of the homepage is updated so as to update the list of content and to delete the links to the second and third structured pages.

The design of a page of a website may be adapted to the keywords of a logged-in registered visitor, stored in the database 110. The adaptation comprises the change of a first template by a second template of the visited page of the website. For example, the publications related to keywords of the publisher that match those of the logged-in registered visitor may be highlighted for the logged-in registered visitor and appear before other publications of the publisher. By way of example, the matching keywords can be shared interests, common location, or common language preferences, etc.

Figure 10 displays a method of adaptation of the design of a visited page of a website to the profile of the visitor in a number of embodiments of the invention.

For example, when a logged-in registered visitor 135 visits a page of a website of a publisher 130, the program 100 accesses said publisher's keywords 1000 and said logged-in registered visitor's keywords 1100, both stored in database 110. According to the confidentiality level 1200 defined by the publisher and the matching keywords between the publisher and the logged-in registered visitor, the program 100 selects one or more visual elements in the content of the visited page to be displayed for said logged-in registered visitor 135, forming thus a second content 1300 of said visited page, accesses database 105, retrieves one or more second templates 1400 that are adapted to said second content of said visited page, selects one of them 1500, prepares a change of the layout of the respective page and replaces said first template by the selected second template.

The selection of said second template 1500 among retrieved second templates 1400 can be done based on the choice of the publisher or otherwise by the program 100 after a predefined timer or systematically by the program 100. The selection by the program 100 can be based on a preference order or randomly.

A first template of a page visited by several logged-in registered visitors is replaced by a second template according to the keywords of a first logged-in registered visitor, a third template according to said keywords of a second logged-in registered visitor, etc.

First template and all said second, third, etc templates adapted to one or more logged-in registered visitors are stored in the database 110 as history within the keywords of the publisher for further fast retrieval when a same logged-in registered visitor visits another time the website of the publisher.

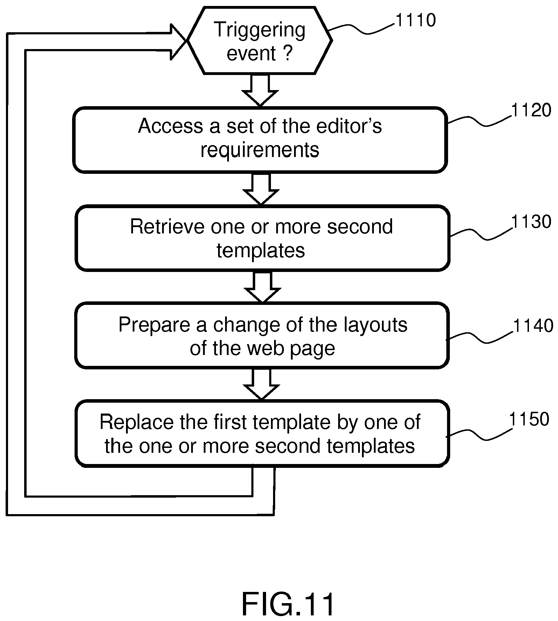

Figure 11 displays a flow chart of the steps of dynamic design update method in a number of embodiments of the invention.

Given a website of said publisher, comprising at least a homepage and possibly one or more structured pages designed according to a first template, according to the invention, there is a step 1110 of receipt of a triggering event. The triggering event may be of different types. As already explained above, it may be a change in the content of a structure page, a change of an interest and/or a preference of the publisher, a log-in of a visitor of a specific type. It may also be a temporal event, such as occurrence of a predefined date, occurrence of a randomly generated date, occurrence of a predefined cycle time.

Then, at step 1120, program 100 accesses said publisher's keywords stored in database 110. The keywords may be representative of the publisher's identity, gender, location, occupation, spoken languages, interests in business, interests in life, family connections, academic background, or preferences in relation thereto or preferences in terms of color, sound, hardware or software capabilities or configuration, etc...

The users' keywords may be static or variable.

Variable keywords of a registered user may be updated manually by him/her or updated automatically by program 100 based for example on a heuristic defined by the registered user or by the Internet Access Provider.

A registered user's keywords may evolve automatically based on a heuristic defined by an internet access provider of the website, such as extrinsic factors: for instance, location may be detected automatically through a GNSS receiver in the terminal used by a logged-in registered user/publisher; interests or preferences may be updated based on history of internet browsing.

Said heuristic may be defined as a function of characteristics of visitors of a website, based for example on statistical analyses of the number of visits of one or more publications of the website, or statistical analyses of actions taken as consequence of a visit of the website such as performing business actions, contacting the publisher of the website, introducing another registered user to the publisher, etc.

At step 1130, program 100 retrieves one or more second templates automatically configured based on the set of the publisher's keywords. In some embodiments, only one second template is retrieved from the database. In some other embodiments, a plurality of second templates is retrieved from the database. The two variants may coexist in the same system and be each implemented for different types of publishers.

At a step 1140, program 100 prepares a change of the layout of the one or more pages considered by the design update. In some variants of the invention, the selection of the one or more second templates may be made to depend upon a combination of keywords. For instance, location and interests/preferences. The weighting of the keywords in the combination may be constant or vary over time, or based on a constraint set by the webmaster of the ISP to maximize the occurrence of certain types of templates or sub-templates.

At a step 1150, program 100 replaces the first template by one of the one or more second templates.

The program 100 and the databases 105, 110 may be implemented on a same server or on different servers, physical or logical. They may interact through any kind of communication link, wired or wireless, terrestrial or satellite. The ISPs, the registered users and/or the visitors may connect to the servers, when necessary using any kind of terminal, desktop, laptop, tablet, smart phone, etc.

The examples disclosed in this specification are only illustrative of some embodiments of the invention. The examples disclosed in this specification are only illustrative of some embodiments of the invention. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof. They do not in any way limit the scope of said invention which is defined by the appended claims.

## Claims

1. A method of dynamically updating a page of a website designed by a publisher (130), the page having a set of visual elements organized according to a first template of layout, said method comprising:
- accessing a set of the publisher's keywords (910);
- retrieving one or more second templates (920) automatically configured based on the set of the publisher's keywords (910);
- preparing a change of the layout of the web page, said change comprising replacing the first template by one of the one or more second templates (930); wherein said preparing is triggered by an event (900).

2. The method of claim 1, wherein the event (900) is:
- addition or removal of one or more of the visual elements to or from the page of the website or another page linked thereto, or
- occurrence of a predefined time.

3. The method of one of claims 1 to 2, wherein the one or more second templates (920) are selected among previous first templates.

4. The method of one of claims 1 to 3, wherein the first template and the one or more of the second templates (920) are defined based on the keywords (1100) of a logged-in registered visitor (135).

5. The method of one of claims 1 to 4, wherein one or more second templates (920) are formed by combination of header (115), body (120) and footer (125) sub-templates, each one of the header, body and footer and their combination based on the set of the publisher's keywords (1000) and the visual elements of the page of the website.

6. The method of one of claims 1 to 5, wherein one or more second templates are formed by combination of header (115), body (120) and footer (125) sub-templates, said sub-templates being generated automatically.

7. The method of one of claims 1 to 6, wherein said body of a page of a website is generated by a concatenation of a predefined number of visual elements having predefined statistical dimensions.

8. The method of claim 7, wherein a specific format is adapted for one or more visual elements permitting an interoperability between said first template and said one or more second templates (920).

9. The method of claim 8, wherein the specific format is a 16/9 format.

10. The method of claim 7, wherein a combination of a plurality of specific formats is adapted for a plurality of visual elements according to one or more rules of interoperability between said first template and said one or more second templates (920).

11. The method of claim 10, wherein the combination is provided for 16/9 format and 4/3 format, and the one or more rules of interoperability define the number and orientation of visual elements according to each specific format.

12. The method of one of claims 1 to 11, wherein the set of the publisher's keywords (1000) may be updated dynamically.

13. The method of one of claims 1 to 12, wherein the set of the publisher's keywords (1000) comprises a plurality of keywords that may be combined based on a heuristic defined by an internet access provider of the website.

14. The method of one of claims 1 to 13, wherein the set of the publisher's keywords comprises a plurality of keywords that may be combined based on a heuristic defined by the publisher (130).

15. The method of one of claims 13 to 14, wherein the heuristic is defined as a function of characteristics of visitors to the website.

16. A computer program (100) stored on a physical memory comprising code instructions that, when run on a processor, are configured to cause an update of a page of a website designed by a publisher, the page having a set of visual elements organized according to a first template of layout, said update comprising:
- an access to a first database (110) comprising sets of the publisher's keywords;
- a retrieval from a second database (105) of one or more second templates;
- an automatic configuration of the one or more second templates (920) based on the set of the publisher's keywords (1000);
- a selection of one of the one or more second templates (930);
- a preparation triggered by an event (900) of a change of the visual elements of the web page, said change comprising replacing the first template by one of the one or more second templates (930).
